# EUROPÄISCHE PATENTSCHRIFT

(11) **EP 1 978 686 B1**
(45) Veröffentlichungstag und Bekanntmachung des Hinweises auf die Patenterteilung: **27.07.2016**
(21) Anmeldenummer: 07105778.0
(22) Anmeldetag: 05.04.2007
(51) Int. Cl.: G08B 25/00, H04L 12/701, H04W 40/10, H04W 40/12, H04L 12/727, H04L 12/733, H04L 12/721

(54) **Multihop Funk-Gefahrenmeldesystem**
Multi-hop wireless alarm signalling system
Système de détection des dangers radio multihop

(43) Veröffentlichungstag der Anmeldung: 08.10.2008
(60) Teilanmeldung: 16001368.6
(73) Patentinhaber: Siemens Schweiz AG, 8047 Zürich (CH)
(72) Erfinder: Blum, Philipp, 6005, Luzern (CH); Meier, Andreas, 8134, Adliswil (CH); Strasser, Mario, 9220, Bischofszell (CH)
(74) Vertreter: Maier, Daniel Oliver

(56) Entgegenhaltungen:
- EP-A- 1 282 094
- EP-A1- 1 507 244
- WO-A-99/17477
- US-A1- 2006 013 154
- US-A1- 2006 133 328

## Beschreibung

Die Erfindung betrifft ein Verfahren und ein System zur Übertragung einer Nachricht in einem funkbetriebenen Kommunikationsnetz mit einer Basiseinheit und mehreren Teilnehmern, wobei die Basiseinheit und die Teilnehmer jeweils einen Sender und einen Empfänger aufweisen und wobei der Empfänger zu zyklischen Einschaltzeitpunkten für jeweils einen bestimmten Empfangszeitraum aktiviert wird.

Aus der europäischen Offenlegungsschrift EP 1 282 094 A2 ist ein Verfahren zur Funkübertragung in einem Gefahrenmeldesystem mit mehreren Teilnehmern bekannt, die jeweils einen Sender und einen Empfänger umfassen. Die Empfänger werden zyklisch zu vorgegebenen Zeitpunkten eingeschaltet. Sendewillige Teilnehmer senden eine Präambel. Die Empfänger bleiben im Falle des Empfangs einer Präambel bis zum Ende der gesamten Präambel eingeschaltet. Sie werden im Falle, dass keine Präambel empfangen wird, wieder ausgeschaltet. In der Präambel wird der Startzeitpunkt eines Datentelegramms übermittelt. Der Empfänger wird nach Erhalt des Startzeitpunktes ausgeschaltet und zu diesem Startzeitpunkt wieder eingeschaltet. Der sendewillige Teilnehmer sendet zu diesem Startzeitpunkt über seinen Sender das Telegramm aus, welches dann vom Empfänger empfangen wird. Die einzelnen Teilnehmer können zusätzliche Sensoren aufweisen, die beispielsweise eine Brandgefahr detektieren. Die Teilnehmer können auch zentrale Funktionen übernehmen, beispielsweise einen Alarm einleiten.

Aus der internationalen Veröffentlichung WO 99/17477 A2 ist ein Überwachungssystem mit einem zweistufigen Kommunikationsnetzwerk bekannt. Eine Vielzahl erster Netzknoten (Funksensor) weist jeweils einen drahtlosen oder RF-Sensor auf, welcher jeweils mit einem Transceiver mit einer ersten geringen Sendeleistung ausgestattet ist. Die Funksensoren können z.B. Bewegung-, Glasbruch-, Temperatur- oder Kohlenmonoxidsensoren sein. Eine Vielzahl zweiter Netzknoten (Router) ist sowohl zur Kommunikation mit ausgewählten Funksensoren mit geringer Bandbreite als auch zur Kommunikation mit weiteren Routern untereinander bei höherer Sendeleistung und mit höherer Bandbreite beabstandet angeordnet, um die Kommunikation der Funksensoren zu einem zentralen Controller zu vermitteln. Es wird dynamisch eine Vermittlungstabelle zur direkten Kommunikation zwischen den Routern und dem zentralen Controller erzeugt. Bei einer Ausführungsform sind die Funksensoren zum Stromsparen derart ausgestaltet, dass die Empfängereinheit des jeweiligen Transceivers zyklisch ein- und ausgeschaltet wird. Der jeweils zum Funkempfänger nächstliegende Router plant dies für die Kommunikationsübertragung in entsprechender Weise zeitlich ein.

Funkbasierte bzw. funkbetriebene Gefahrenmeldesysteme umfassen in einer Funkzelle Meldesensoren als Teilnehmer des Gefahrenmeldesystems, die im Fall einer detektierten Gefahr (Brand, Einbruch etc.) eine Gefahrenmeldung über eine Funkverbindung an eine Zentrale übermitteln. Die Übertragung kann dabei direkt an eine Gefahrenmeldezentrale (dann hat das Gefahrenmeldesystem nur eine Funkzelle) oder über Teilnehmer, zum Beispiel Gefahrenmeldeeinheiten, wie zum Beispiel Brandmelder, Einbruchsmelder, Gasmelder, akustische Meldeeinheiten, optische Meldeeinheiten, optoakustische Meldeeinheiten etc. des Gefahrenmeldesystems erfolgen. Dabei werden derartige funkbasierte Gefahrenmeldesysteme als sogenannten Multihop Funk Gefahrenmeldesysteme bezeichnet, wenn es Teilnehmer gibt, die nicht direkt mit der Zentrale verbunden sind. Nachrichten werden dann entlang von Kommunikationspfaden bzw. Übertragungswegen übertragen. Grundsätzlich wird ein Multihop Gefahrenmeldesystem als verbunden bezeichnet, wenn zwischen jedem Paar von Teilnehmern mindestens ein Kommunikationspfad besteht.

Hat die Zentrale eine Nachricht von einem Teilnehmer erhalten, so können zum Beispiel zur Beseitigung der Gefahr weitere Maßnahmen (Alarmierung der Feuerwehr bzw. der Polizei) eingeleitet werden. Die Meldesensoren umfassen dabei eine Sende- und Empfangseinrichtung und sollen für einen Einsatz an unzulänglichen Orten möglichst autark, das heißt mit einer Batterie und nicht durch einen Kabelanschluss an einem Stromnetz betrieben werden. Dafür sind alle Komponenten des Meldesensors möglichst stromsparend auszulegen, und die Komponenten sollten auch nur zu bestimmten Zeiten eingeschaltet werden und nicht ständig in Betrieb sein. Die Batterielebensdauer soll beispielsweise größer als fünf Jahre sein. Auch weitere Teilnehmer, wie zum Beispiel Bedienfelder, optische, akustische, optoakustische Meldeeinheiten etc. sollen mit der Zentrale oder mit Zwischenstationen über eine Funkübertragung kommunizieren können und sind daher wie die Meldesensoren entsprechend stromsparend auszulegen.

Grundsätzlich ist es wichtig, dass jeder Teilnehmer der Basiseinheit zuverlässig und schnell Nachrichten übermitteln kann. Insbesondere muss sichergestellt sein, dass ein Teilnehmer eine erkannte Gefahr an die Basiseinheit sicher melden kann. Dabei ist es nicht notwendig, dass der versendende Teilnehmer und die Basiseinheit benachbart sind, d.h. eine Nachricht kann über möglicherweise mehrere Teilnehmer bzw. Zwischenstationen zum Ziel geleitet werden. Diese Funktion wird typischerweise als Routing bezeichnet.

Ein Routingverfahren wird als zuverlässig bezeichnet, wenn eine Nachricht auch dann das Ziel erreicht, wenn eine oder mehrere Teilnehmer des funkbetriebenen Gefahrenmeldesystems ausfallen oder die Kommunikation zwischen zwei oder mehr benachbarten Teilnehmern gestört ist. Natürlich ist dies nicht in jedem Fall möglich, sondern nur solange wie ein Kommunikationspfad zwischen Ursprungs- und Zieleinheit besteht. Wenn ein solcher Kommunikationspfad bzw. Übertragungsweg besteht, soll ein zuverlässiges Routingverfahren die Nachricht mit hoher Wahrscheinlichkeit zur Zielstation transportieren.

Die Laufzeit einer Nachricht in einem Multihop System ist grundsätzlich bestimmt durch die Zahl der Zwischenstationen auf dem kürzesten Kommunikationspfad zwischen Ursprungs- und Zieleinheit, sowie der durchschnittlichen Übertragungszeit zwischen zwei benachbarten Teilnehmern. Die durchschnittliche Übertragungszeit zwischen zwei benachbarten Teilnehmern ist hauptsächlich durch die Länge der inaktiven Phase der Teilnehmer bestimmt. Ein Routingverfahren wird als schnell bezeichnet, falls die Laufzeit die oben beschriebene Laufzeit in der Regel unterschreitet bzw. niemals deutlich überschreitet.

In bekannten Multihop Funksystemen sind zur Nachrichtenübertragung zwei Ansätze bekannt:
- Beim ersten Ansatz wird der Empfang einer Meldung von der Zieleinheit quittiert, das heißt eine Quittungsmeldung wird wiederum über mehrere Teilnehmer an den absendenden Teilnehmer gesendet. Falls die Meldung oder deren Quittung nicht ankommt versendet der absendende Teilnehmer die Meldung erneut. Je nach Ausgestaltung des Verfahrens werden dabei die gleichen oder teilweise andere Teilnehmer benutzt. Der Nachteil derartiger Verfahren ist, dass sowohl die Quittierung als auch das erneute Versenden der Nachricht und eventuell auch das Bestimmen neuer Zwischeneinheiten Zeit benötigt. Solche Verfahren sind zuverlässig, aber im Fehlerfall langsam.
- Beim zweiten Ansatz werden für die Übermittlung einer Meldung von Anfang an verschiedene Pfade (Abfolgen von Zwischeneinheiten) verwendet. Somit erreicht die Meldung die Zieleinheit auch in dem Fall, dass eine begrenzte Zahl von Zwischeneinheiten ausfällt oder die Kommunikation zwischen benachbarten Teilnehmern gestört ist. Eine mögliche Ausgestaltungsform dieses Ansatzes ist als Fluten (Flooding) bekannt. Hier wird eine Meldung jeweils an alle benachbarten Teilnehmer weitergeleitet, was den Energieverbrauch des funkbetriebenen Systems erheblich erhöht.
- Die Übertragungszeit zum Versenden einer Nachricht nimmt direkt mit der Anzahl der Zwischeneinheiten zu, da eine Nachricht erst dann weitergeleitet werden kann, wenn sie komplett empfangen wurde. Die Übertragungszeit kann daher dadurch verkleinert werden, dass ein möglichst kurzer Pfad verwendet wird, also möglichst wenige Zwischenstationen involviert werden. Dies ist möglich, wenn Strecken zwischen benachbarten, aber geographisch möglichst weit auseinander liegenden Teilnehmern verwendet werden. Solche Strecken sind typischerweise aber fehleranfälliger als andere, was zwar zu einer schnellen, aber nicht zuverlässiger Kommunikation führt.

Die Aufgabe der vorliegenden Erfindung ist darin zu sehen, eine Lösung für eine schnellstmögliche zuverlässige, jedoch energieeffiziente Übertragung von Nachrichten in einem funkbetriebenen Gefahrenmeldesystem vorzuschlagen.

Die Aufgabe wird erfindungsgemäß jeweils durch die Gegenstände der unabhängigen Patentansprüche gelöst. Weiterbildungen der Erfindung sind in den Unteransprüchen angegeben.

Ein Kern der Erfindung ist darin zu sehen, dass in einem funkbetriebenen Kommunikationsnetz eine von einem Teilnehmer an eine Basiseinheit zu versendende Nachricht vom versendenden Teilnehmer an mindestens einen benachbarten Teilnehmer in Abhängigkeit mindestens einer Regel übermittelt wird. Der mindestens eine benachbarte Teilnehmer übermittelt seinerseits gemäss der mindestens einen Regel die Nachricht in Richtung der Basiseinheit an mindestens einen seiner benachbarten Teilnehmer. Dieser Vorgang wird entsprechend wiederholt, sodass jeder die Nachricht empfangende Teilnehmer die Nachricht wiederum an mindestens einen seiner Teilnehmer übermittelt. Bei Erhalt der Nachricht durch mindestens einen Teilnehmer, der mit der Bäsiseinheit benachbart ist, übermittelt dieser die Nachricht an die Basiseinheit. Zum Übermitteln der Nachricht wird die Einschaltzeit der benachbarten Teilnehmer als mindestens eine Regel verwendet.

Ein funkbetriebenes Kommunikationsnetz weist zumindest eine Basiseinheit und mehrere Teilnehmer auf. Dabei besitzen die Basiseinheit und die Teilnehmer jeweils einen Sender und einen Empfänger, wobei der Empfänger zu zyklischen Einschaltzeitpunkten für jeweils einen bestimmten Empfangszeitraum aktiviert ist. Zur Übertragung der Nachricht in einem funkbetriebenen Kommunikationsnetz wird von jedem Teilnehmer mindestens eine Information betreffend den Einschaltzeitpunkt des Teilnehmers an die direkt benachbarten Teilnehmer gesendet. Gemäss einer Regel wird die Information der Einschaltzeit eines Teilnehmers verwendet, indem die Nachricht an den mindestens einen Teilnehmer gesendet wird, der den frühest möglichen Einschaltzeitpunkt aufweist.

Im Allgemeinen wird als Basiseinheit eine Gefahrenmeldezentrale verwendet, da zum Beispiel Gefahren üblicherweise schnell und zuverlässig an eine Gefahrenmeldezentrale gemeldet werden müssen.

Eine weitere Regel zur Nachrichtenübermittlung kann erfindungsgemäss die Verwendung der Kommunikationsebene eines Teilnehmers sein. Dabei teilt jeder Teilnehmer seinen benachbarten Teilnehmern zum Beispiel in drei Gruppen ein. Ein benachbarter Teilnehmer ist entweder näher bei der Basiseinheit (Parent), womit er zur Gruppe "nah" zugeordnet wird. Oder er ist "gleich weit" (Peer) von der Basiseinheit entfernt oder der benachbarte Teilnehmer ist weiter entfernt "fern" (Child). Selbstverständlich sind jegliche Einteilungen in betreffende Gruppen für das erfindungsgemässe Verfahren vorstellbar.

Um nun die Einteilung der benachbarten Teilnehmer in "Parents", "Peers" und "Children" vornehmen zu können müssen die Teilnehmer ihre Distanz zur Basiseinheit kennen (ohne die Allgemeinheit des Verfahrens einzuschränken wird nachfolgend immer davon ausgegangen, dass die Basiseinheit als Ziel für eine zu versendende Nachricht fungiert). Für den Aufbau dieser Information können beispielsweise bekannte Verfahren zur Konstruktion eines sogenannten kürzesten Übertragungsweg-Baumes (Shortest Path Tree = SPT) verwendet werden. Dabei setzen alle Teilnehmer die Distanz zur Basiseinheit zum Beispiel anfänglich auf einen sehr hohen Wert. Nun beginnt die Basiseinheit damit, an alle benachbarten Teilnehmer eine Signalisierungsnachricht mit einem Parameter (Wert) mit dem sinngemäßen Inhalt "Level=1" zu verschicken. Die Teilnehmer, die eine solche Signalisierungsnachricht erhalten, setzen Ihre Distanz auf den erhaltenen Wert (also 1) und verschicken ihrerseits eine Signalisierungsnachricht mit Inhalt "Level=2", also den nächst höheren Wert, an alle ihnen benachbarten Teilnehmer. Immer wenn ein Teilnehmer eine Signalisierungsnachricht mit einem Wert erhält, welcher niedriger ist als die momentan gespeicherte Kommunikationsebene bzw. Distanz zur Basiseinheit, wird diese Kommunikationsebene gespeichert und die benachbarten Teilnehmer werden entsprechend mit einer Signalisierungsnachricht mit dem Parameter, der die nächst höhere Kommunikationsebene repräsentiert, benachrichtigt. Im anderen Fall, also der erhaltene Wert ist gleich groß oder größer als die momentan gespeicherte Kommunikationsebene, wird die Signalisierungsnachricht ignoriert und verworfen.

Eine Nachricht wird erfindungsgemäss gemäss der mindestens einen Regel dann nur an solche Teilnehmer versandt, die eine niedrigere und/oder gleich hohe Kommunikationsebene aufweisen. Die niedrigere Kommunikationsebene ist im Bezug auf die Kommunikationsebene des versendenden Teilnehmers zu sehen. Der Teilnehmer mit niedrigerer Kommunikationsebene wird ermittelt, indem der versendende Teilnehmer seine eigene Kommunikationsebene mit der Kommunikationsebene seiner benachbarten Teilnehmer vergleicht, die er aufgrund der ausgetauschten Signalisierungsnachrichten kennt.

Eine weitere Regel des Verfahrens legt fest, in welcher Reihenfolge die ausgewählten "Parents" und "Peers" angesprochen werden. Hierzu werden die beschriebenen Einschaltzeitpunkte der benachbarten Teilnehmer verwendet. Die Einschaltzeitpunkte können zum Beispiel als sekundäres Ordnungsmerkmal, aber auch als primäres Ordnungsmerkmal, verwendet werden. Das heißt, zuerst werden "Parents" und danach "Peers" angesprochen. Wenn mehrere Parents (oder Peers) zur Auswahl stehen, werden diese in der Reihenfolge der Aufwachzeitpunkte angesprochen.

Gemäss dem erfindungsgemässen Verfahren kann eine zu versendende Nachricht von einem Teilnehmer an mehrere benachbarte Teilnehmer verschickt werden. Dabei wird jeweils ein einzelner benachbarter Teilnehmer adressiert. Teilnehmer, welche die Nachricht erhalten, können diese wiederum gemäss dem erfindungsgemässen Verfahren an mehrere benachbarte Teilnehmer weiterleiten. Damit wird sichergestellt, dass die Nachricht mindestens einmal die Basiseinheit erreicht.

Als eine der wichtigsten Regeln gilt, dass "Parents" gegenüber "Peers" bevorzugt werden, da diese einen kürzeren Kommunikationspfad bzw. Übertragungsweg zur Basiseinheit besitzen. "Children" werden in der Regel nicht verwendet, da sich sonst die Meldung von ihrem Ziel weg bewegt.

Eine weitere Regel kann festlegen, dass Teilnehmer eine Gefahrenmeldung nie an einen benachbarten Teilnehmer weiterleiten von der diese Nachricht empfangen wurde.

Ein Teilnehmer kann grundsätzlich die gleiche Nachricht auch mehrmals erhalten. In diesem Fall wird die Nachricht nur beim ersten Empfang weitergeleitet, nachfolgend erhaltenen Kopien der Meldung werden ignoriert.

Das erfindungsgemässe Verfahren kann auch derart gestaltet werden, dass bei jeder Kommunikation zwischen benachbarten Teilnehmern quittiert wird, also der Empfang der Nachricht mittels einer Signalisierungsnachricht bestätigt wird. Falls keine Quittung bzw. Bestätigung erhalten wird, muss der versendende Teilnehmer davon ausgehen, dass die Meldung nicht korrekt empfangen wurde. Um trotzdem eine genügende Zuverlässigkeit zu erhalten kann ein Teilnehmer die Nachricht nun an zusätzliche "Parents" und/oder "Peers" übermitteln. Dabei gelten folgende Regeln:
a) Ein benachbarter Teilnehmer, welcher den Erhalt der Nachricht nicht quittiert hat, wird erst wieder angesprochen, wenn alle anderen "Parents" und "Peers" angesprochen wurden und dieser mindestens eine Übermittlungsversuch nicht oder nur teilweise erfolgreich war, also, dass zumindest ein benachbarter Teilnehmer keine Bestätigung zurück gesandt hat.
b) Nur beim ersten Durchgang des Übermittlungsversuchs werden die Teilnehmer mit niedriger Kommunikationsebene "Parents" gegenüber den Teilnehmern mit höherer Kommunikationsebene "Peers" bevorzugt, danach werden nur noch die Einschaltzeitpunkte verwendet.
c) Wenn ein Teilnehmer den Erhalt der Nachricht quittiert, wird er nicht mehr weiter angesprochen.
d) Die maximale Anzahl der Übermittlungsversuche ist ein wählbarer Parameter bzw. ein Wert.

Die verschiedenen Parameter bzw. die verschiedenen Regeln können bei jeder Kommunikation mit einem Teilnehmer in Form einer Signalisierungsnachricht von der Basiseinheit übermittelt werden. Der Teilnehmer speichert die Parameter und die Regeln und wendet sie im Bedarfsfall an.

Die Einteilung der Teilnehmer in Kommunikationsebenen, wie zum Beispiel "Parents", "Peers" und "Children" kann auch dazu verwendet werden, Nachrichten effizient von der Basiseinheit zu den Teilnehmern zu übertragen. Dabei werden die benachbarten Teilnehmer wie folgt ausgewählt:
a) Eine Nachricht wird an alle Teilnehmer mit hoher Kommunikationsebene, zum Beispiel "Children", versandt.
b) Die Reihenfolge der Übermittlung an die Teilnehmer mit hoher Kommunikationsebene "Children" untereinander wird nach deren Einschaltzeitpunkte bestimmt.
c) Je nach gewünschter Zuverlässigkeit können zusätzlich auch Teilnehmer mit niedrigerer Kommunikationsebene, zum Bespiel "Peers" verwendet werden.

Ein Vorteil des erfindungsgemässen Verfahrens liegt darin, dass ein Ereignis, wie zum Beispiel ein Alarm, schnell und zuverlässig über mehrere Teilnehmer an eine Basiseinheit gemeldet werden kann. Besonders ausgeprägt ist der Geschwindigkeitsvorteil gegenüber solchen Systemen, bei welchen die Teilnehmer nicht permanent sondern nur periodisch für die Kommunikation zur Verfügung stehen.

Ein weiterer Vorteil des Verfahrens besteht in der Zuverlässigkeit in dem Sinn, dass das System auch dann eine Nachricht von einem Teilnehmer an die Basiseinheit zuverlässig übermittelt, wenn eine oder mehrere Teilnehmer, selbstverständlich außer dem ursprünglich die Nachricht versendenden Teilnehmer und der Basiseinheit, nicht funktionieren bzw. ein oder mehrere benachbarte Teilnehmer temporär nicht miteinander kommunizieren können. Somit weist das erfindungsgemässe Verfahren einen den üblichen Routing-Verfahren über eine a-priori festgelegte Route erheblich Vorteile auf. Ein solches "herkömmliches" Routingverfahren kann zuverlässiger gestaltet werden, wenn bei auftretenden Problemen dynamisch eine neue Route gesucht wird, jedoch benötigt ein derartiges dynamisches Verfahren sehr viel mehr Zeit für die Übertragung einer Nachricht.

Durch die Verwendung des erfindungsgemässen Verfahrens kann eine hohe Zuverlässigkeit bei geringem Energieverbrauch erreicht werden.

Die Erfindung wird anhand eines in einer Figur dargestellten Ausführungsbeispiels näher erläutert. Dabei zeigen
- Figur 1: ein typisches Beispiel für ein Multihop Funk Gefahrenmeldesystem,
- Figur 2: ein Multihop Funk Gefahrensystem, bei welchem die Teilnehmer in Kommunikationsebenen eingeteilt sind,
- Figur 3: einen Nachrichtenversand in einem gemäss Figur 2 eingeteilten Multihop Funk Gefahrenmeldesystem,
- Figur 4: das Versenden einer Nachricht von der Basiseinheit an die Teilnehmer,
- Figur 5: den Versand einer Nachricht aus Sicht eines Teilnehmers.

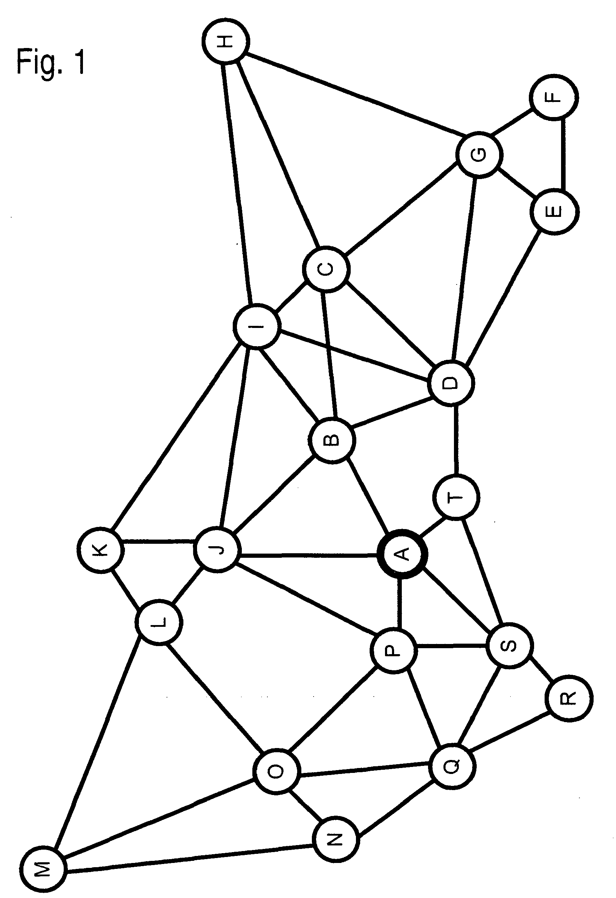

Figur 1 zeigt ein typisches Beispiel für ein Multihop Funk Gefahrenmeldesystem. Dabei weist dieses System eine Basiseinheit A und mehrere Teilnehmer B bis T auf.

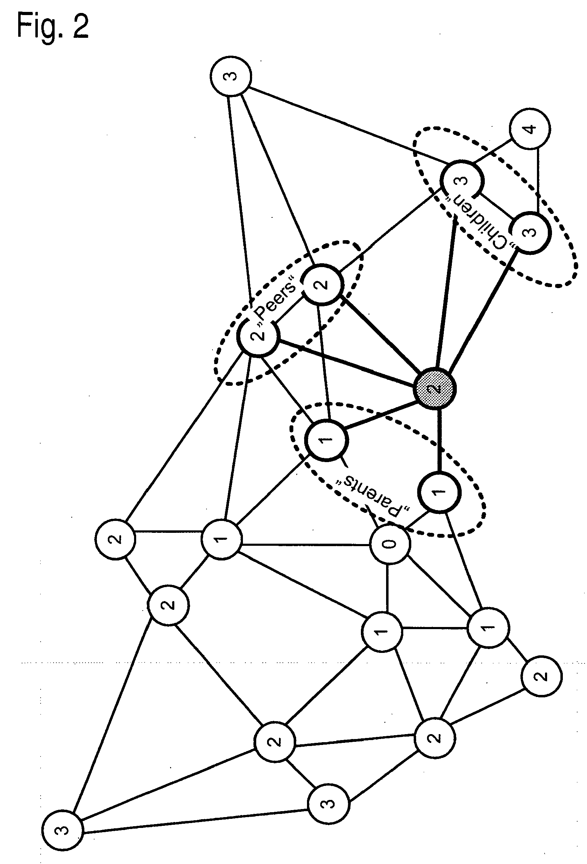

Figur 2 zeigt ein Multihop Funk Gefahrensystem, bei welchem die Teilnehmer in Kommunikationsebenen 0, 1, 2, 3, 4 eingeteilt sind. Die Basiseinheit A hat die Kommunikationsebene 0. Die direkt benachbarten Teilnehmer T, B, J, P, S haben die Kommunikationsebene 1. Die Kommunikationsebene gibt die minimale Anzahl der Teilnehmer zwischen dem Teilnehmer und der Basiseinheit an. Der dunkel hervor gehobene Teilnehmer D hat die Distanz bzw. Kommunikationsebene 2 (eine Zwischeneinheit) zur Basiseinheit A, und damit zwei nahe Teilnehmer T, B mit Kommunikationsebene 1 (Parents), zwei gleich weit entfernte Teilnehmer I, C mit Kommunikationsebene 2 (Peers), sowie zwei entfernte Teilnehmer G, E mit Kommunikationsebene 3 (Children). Die Teilnehmer B, T, J, P, S, die direkt mit der Basiseinheit A verbunden sind, also benachbart sind, haben die Kommunikationsebene 1 und somit die Distanz 1 zur Basiseinheit A.

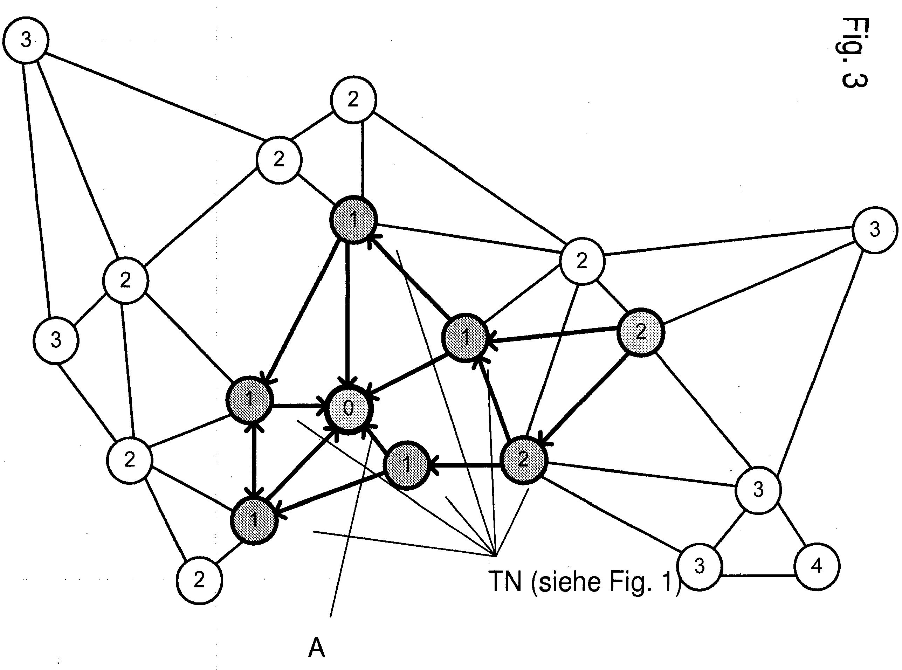

Figur 3 zeigt einen Nachrichtenversand in einem gemäss Figur 2 eingeteilten Multihop Funk Gefahrenmeldesystem mit der Bezeichnung der Teilnehmer gemäss Figur 1. Der Teilnehmer C generiert eine Gefahrenmeldung für die Basiseinheit A. Der Teilnehmer C schickt diese Nachricht an seinen einzigen "Parent" - Teilnehmer B und zusätzlich an einen "Peer" - Teilnehmer D. Der Teilnehmer B leitet die Nachricht an die Basiseinheit A, sowie an den Teilnehmer J. Der Teilnehmer D sendet die Meldung an die zwei "Parents"-Teilnehmer B und T, etc. Die am Versand beteiligten Teilnehmer sind dunkel hervor gehoben. Die verwendeten Kommunikationsverbindungen sind fett gezeichnet.

Dabei versendet ein Teilnehmer die Nachricht gemäss einer Regel niemals an den Teilnehmer zurück, von der er die Nachricht erhalten hat. In diesem Beispiel sendet der Teilnehmer J die Nachricht an die Basiseinheit A und dem Teilnehmer P und nicht an den Teilnehmer B, da die Nachricht vom Teilnehmer B empfangen wurde. Eine Nachricht kann dabei eine Signalisierungsnachricht, eine Alarm-Nachricht, eine Nachricht betreffend den Austausch von Nutzdaten etc. sein.

Empfängt ein Teilnehmer B von mehreren Teilnehmern, hier die Teilnehmer C und D, die Nachricht, leitet der Teilnehmer B gemäss einer Regel die Nachricht trotzdem nur einmal an die Teilnehmer A und J weiter.

Jeder an der Nachrichtenübermittlung beteiligter Teilnehmer J, B, D, T, S, P übermittelt die Nachricht an zwei benachbarte Teilnehmer J, B, D, T, S, P. Damit wird das erfindungsgemässe Verfahren zuverlässig gegenüber Ausfällen von einzelnen Teilnehmer oder einer gestörten Kommunikation zwischen benachbarten Teilnehmern. Die Anzahl zu benachrichtigender benachbarter Teilnehmer J, B, D, T, S, P kann ein mit Hilfe eines Parameter k bestimmt sein. Höhere Werte von k führen zu erhöhter Zuverlässigkeit, allerdings auch zu entsprechend erhöhtem Energieverbrauch, da mehr Nachrichten verschickt werden. Die Benachrichtigung von zwei benachbarten Teilnehmer J, B, D, T, S, P hat sich als vorteilhaft erwiesen, da so bereits eine hohe Zuverlässigkeit zu relativ kleinen Kosten bez. Energieverbrauch erreicht wird.

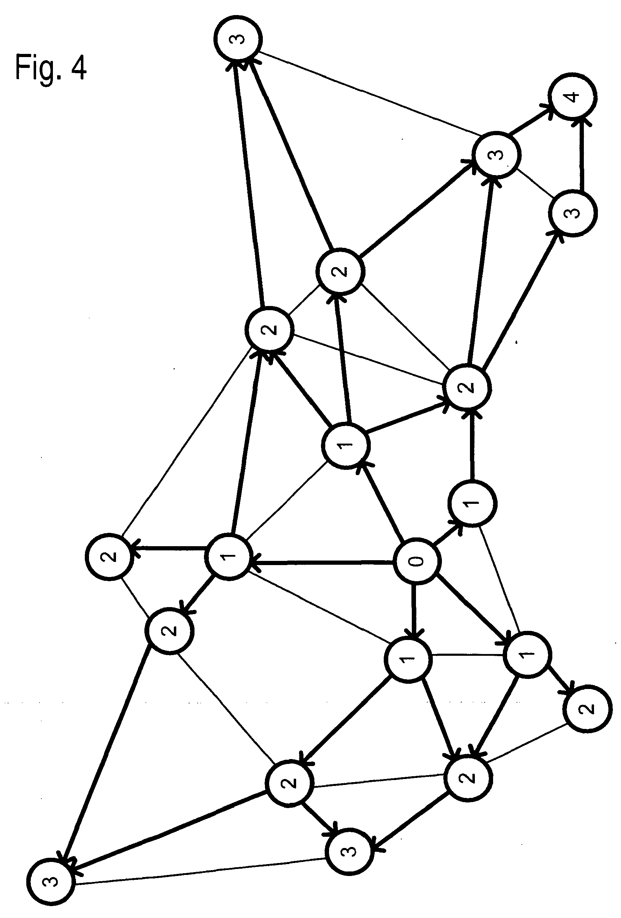

Figur 4 zeigt ein Beispiel des Versendens einer Nachricht von der Basiseinheit an die Teilnehmer B-T. Dabei wird eine Nachricht an die Teilnehmer B-T gesendet. Teilnehmer E, G mit hoher Kommunikationsebene (Children) werten diese Nachricht aus. Die Teilnehmer D, I, C, K, L, R, Q, 0 verwerfen zum Beispiel diese Nachricht. So können alle Teilnehmer B bis T erreicht werden. Dies ist aber nur gewährleistet wenn jede geplante Übertragung auch erfolgreich ist. Trotzdem kann aufgrund des erfindungsgemässen Verfahrens die Nachricht an den Ziel-Teilnehmer übermittelt werden, obwohl Teilnehmer im Kommunikationsnetz ausgefallen sind.

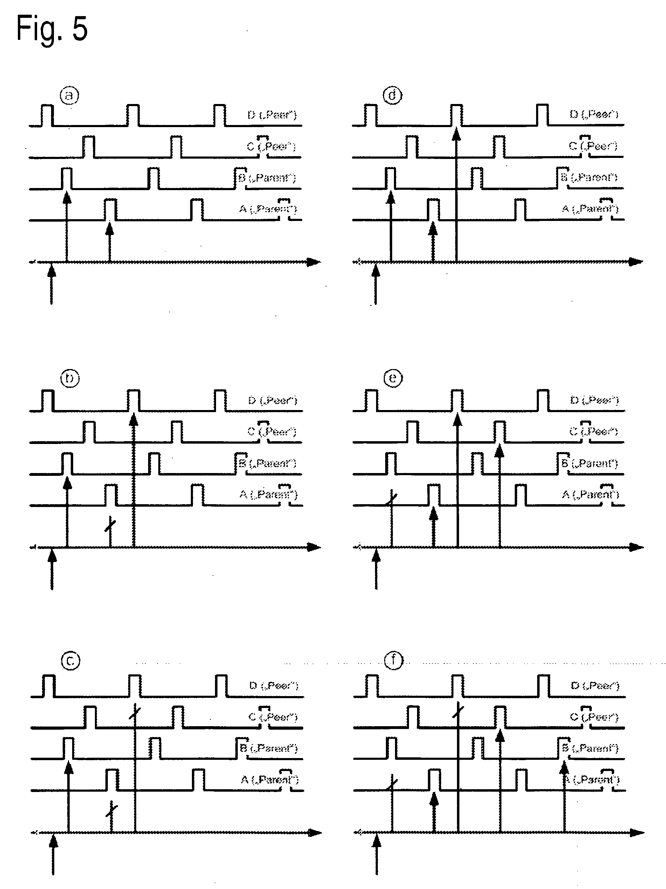

Figur 5 zeigt den Versand einer Nachricht aus Sicht eines Teilnehmers gemäss folgender Beispiele:
a) Eine Nachricht wird an insgesamt zwei benachbarte Teilnehmer übermittelt. Da zwei "Parents"-Teilnehmer A, B zur Verfügung stehen wird die Nachricht nicht an einen "Peer"-Teilnehmer C, D versandt. Der "Parent"-Teilnehmer B wird vor dem "Parent"-Teilnehmer A verwendet, da zum Zeitpunkt der "Parent"-Teilnehmer B zum Zeitpunkt der Nachrichtenübermittlung einen früheren Einschaltzeitpunkt als der "Parent"-Teilnehmer A aufweist.
b) Die Nachricht wird an den "Parent"-Teilnehmer B gesandt, dieser den frühest möglichen Einschaltzeitpunkt aufweist. Bei der Nachrichtenübermittlung an den "Parent"-Teilnehmer erhält der versendende Teilnehmer keine Bestätigung, dass die Nachricht vom "Parent"-Teilnehmer A empfangen wurde. Der versendende Teilnehmer übermittelt daher alternativ die Nachricht an den "Peer"-Teilnehmer D
c) Die Nachricht wird wieder an den "Parent"-Teilnehmer B mit dem frühest möglichen Einschaltzeitpunkt übermittelt. Der Nachrichtenübermittlungsversuch an den "Parent"-Teilnehmer A und den "Peer"-Teilnehmer scheitert, da diese den Empfang der Nachricht nicht bestätigen. In diesem Beispiel ist die Anzahl der Versuche auf einen Versuch begrenzt, was dazu führt, dass die Nachricht nur an den "Parent"-Teilnehmer übermittelt wurde, da der Übermittlungsversuch an die weiteren benachbarten Teilnehmer A, D scheiterte.
d) In diesem Beispiel wird die Nachricht an insgesamt drei benachbarte Teilnehmer B, A, D übermittelt, neben den "Parents"-Teilnehmer A und B wird die Nachricht auch an einen "Peer"-Teilnehmer D versandt. Es wird der "Peer"-Teilnehmer D zur Nachrichtenübermittlung gewählt, da zum Zeitpunkt des Versands der Nachricht an die beiden "Parents"-Teilnehmer A, B der "Peer"-Teilnehmer D den weiteren frühest möglichen Einschaltzeitpunkt hat. Die Reihenfolge der Nachrichtenübermittlung ist also B-A-D und nicht B-C-A, da die Einschaltzeitpunkte in diesem Beispiel erst in zweiter Linie berücksichtigt werden. Vorrangig werden für die Übertragung der Nachricht die "Parents"-Teilnehmer B, A gewählt.
e) In diesem Beispiel bestätigt der "Parent"-Teilnehmer B den Empfang der Nachricht nicht. Daraufhin werden die Teilnehmer in der Reihenfolge A-D-C benachrichtigt. Der Teilnehmer C deshalb, weil an den Teilnehmer B ein weiterer Übermittlungsversuch erst dann stattfindet wenn bei allen anderen benachbarten Teilnehmer ein Übermittlungsversuch stattgefunden hat.
f) Der Teilnehmer B, dem aufgrund seines Einschaltzeitpunktes die Nachricht zuerst übermittelt wurde, bestätigt den Erhalt der Nachricht nicht. Daraufhin findet ein Übermittlungsversuch an alle benachbarten Teilnehmer A, D, C statt. Bei den Teilnehmern A und C ist die Nachrichtenübermittlung erfolgreich. Ebenso wie bei Teilnehmer B bestätigt der Teilnehmer D den Empfang der Nachricht nicht. Nachdem bei allen benachbarten Teilnehmern zumindest ein Übermittlungsversuch der Nachricht stattgefunden hat, wird ein weiterer Übermittlungsversuch der Nachricht bei Teilnehmer B durchgeführt. Diesmal führt der Übermittlungsversuch zum Erfolg und Teilnehmer B bestätigt den Empfang der Nachricht.

## Patentansprüche

1. Verfahren zur Übertragung einer Nachricht in einen funkbetriebenen Kommunikationsnetz mit einer Basiseinheit (A) und mehreren Teilnehmern (B bis T), wobei die Basiseinheit (A) und die Teilnehmer (B bis T) jeweils einen Sender und einen Empfänger aufweisen und wobei der Empfänger zu zyklischen Einschaltzeitpunkten für jeweils einen bestimmten Empfangszeitraum aktiviert wird,
wobei eine von einem Teilnehmer (C) an die Basiseinheit (A) zu versendende Nachricht vom Teilnehmer (C) an mindestens einen benachbarten Teilnehmer (D, B, I) in Abhängigkeit mindestens einer Regel übermittelt wird,
wobei vom mindestens einen benachbarten Teilnehmer (D, B, I) gemäss der mindestens einen Regel die Nachricht in Richtung der Basiseinheit (A) an mindestens einen seiner benachbarten Teilnehmer (T, B, K, J, D) übermittelt wird,
wobei dieser Vorgang entsprechend wiederholt wird, sodass der jeweilige die Nachricht empfangende Teilnehmer (T, B, K, J, D) die Nachricht gemäss der zumindest einen Regel wiederum an mindestens einen seiner Teilnehmer (T, B, K, J, D) übermittelt,
wobei die Nachricht zumindest an die Basiseinheit (A) übermittelt wird,
wobei von jedem Teilnehmer (B bis T) mindestens eine Information betreffend den Einschaltzeitpunkt des Teilnehmers (B bis T) an seine benachbarten Teilnehmer (B bis T) gesendet wird,
wobei zum Übermitteln der Nachricht die Einschaltzeit der benachbarten Teilnehmer (B bis T) als mindestens eine Regel verwendet wird, und
wobei vom Teilnehmer (B bis T) demjenigen seiner benachbarten Teilnehmer (B bis T) die Nachricht übermittelt wird, der den frühest möglichen Einschaltzeitpunkt aufweist.

2. Verfahren nach Anspruch 1,
**dadurch gekennzeichnet,**
**dass** als weitere Regel die Kommunikationsebene eines Teilnehmers (B bis T) verwendet wird.

3. Verfahren nach Anspruch 2,
**dadurch gekennzeichnet,**
**dass** zur Ermittlung der Kommunikationsebene der Teilnehmer (B bis T), die kürzeste Distanz von einem Teilnehmer (B bis T) zur Basiseinheit (A) bestimmt wird.

4. Verfahren nach Anspruch 3,
**dadurch gekennzeichnet,**
**dass** zur Bestimmung des kürzesten Übermittlungsweges von der Basiseinheit (A) eine Signalisierungsnachricht mit mindestens einem Parameter an die benachbarten Teilnehmer (J, B, D, T, S, P) gesendet wird,
**dass** von den die Signalisierungsnachricht empfangenden Teilnehmern (J, B, D, T, S, P) eine Kommunikationsebene in Abhängigkeit des Parameters gespeichert wird,
**dass** von diesen Teilnehmern (J, B, D, T, S, P) eine weitere Signalisierungsnachricht mit einem weiteren Parameter an deren benachbarten Teilnehmern (R, Q, O, L, K, I, C, E, G) gesendet wird und
**dass** von den die weitere Signalisierungsnachricht empfangenden Teilnehmer (R, Q, O, L, K, I, C, E, G) eine weitere Kommunikationsebene in Abhängigkeit des weiteren Parameters gespeichert wird und
**dass** das Verfahren fortgeführt wird bis allen Teilnehmern (B bis T) eine Kommunikationsebene entsprechend dem kürzesten Übermittlungsweg zwischen den Teilnehmer (B bis T) und der Basiseinheit (A) zugeordnet ist.

5. Verfahren nach den Ansprüchen 3 und 4,
**dadurch gekennzeichnet,**
**dass** der Parameter in der Signalisierungsnachricht die Anzahl der Teilnehmer (B bis T) zwischen dem Teilnehmer (B bis T) und der Basiseinheit (A) angibt.

6. Verfahren nach den Ansprüchen 3 bis 5,
**dadurch gekennzeichnet,**
**dass** von dem eine Signalisierungsnachricht mit einem Parameter empfangenden Teilnehmer (B bis T) der Parameter in der Signalisierungsnachricht mit einem bereits empfangenen Parameter verglichen wird.

7. Verfahren nach Anspruch 8,
**dadurch gekennzeichnet,**
**dass** die Signalisierungsnachricht mit dem Parameter verworfen wird, wenn der Wert des Parameters größer ist als der bereits empfangene Parameter.

8. Verfahren nach einem der vorhergehenden Ansprüche, **dadurch gekennzeichnet,**
**dass** gemäss einer Regel vom mindestens einen die Nachricht versendenden Teilnehmer (R, Q, O, L, K, I, C, E, G) die Nachricht an mindestens einen Teilnehmer (J, B, D, T, S, P) mit niedrigerer Kommunikationsebene weitergeleitet wird.

9. Verfahren nach dem Anspruch 8,
**dadurch gekennzeichnet,**
**dass** der mindestens eine benachbarte Teilnehmer (J, B, D, T, S, P) mit niedrigerer Kommunikationsebene vom versendenden Teilnehmer (R, Q, O, L, K, I, C, E, G) durch Vergleich mit der eigenen Kommunikationsebene ermittelt wird.

10. Verfahren nach einem der vorhergehenden Ansprüche,
**dadurch gekennzeichnet,**
**dass** als Basiseinheit (A) entweder eine Gefahrenmeldezentrale und/oder eine Gefahreneinheit verwendet werden.

11. Verfahren nach einem der vorhergehenden Ansprüche,
**dadurch gekennzeichnet,**
**dass** als Teilnehmer (B bis T) eine Gefahreneinheit verwendet wird.

12. Verfahren nach Anspruch 10,
**dadurch gekennzeichnet,**
**dass** als Gefahrenmeldezentrale eine Brandmeldezentrale, eine Einbruchsmeldezentrale und/oder eine Gasmeldezentrale verwendet werden.

13. Verfahren nach den Ansprüchen 10 und 11,
**dadurch gekennzeichnet,**
**dass** als Gefahreneinheit ein Brandmelder, ein Einbruchsmelder, ein Gasmelder, eine akustische Meldeeinheit, ein optische Meldeeinheit, ein Überwachungskamera und/oder eine opto-akustische Meldeeinheit verwendet werden.

14. Verfahren nach einem der vorhergehenden Ansprüche,
**dadurch gekennzeichnet,**
**dass** die Nachricht eine Alarm-Nachricht, eine Sigalisierungsnachricht und/oder eine Nachricht betreffend den Austausch von Nutzdaten darstellt.

15. Verfahren nach einem der vorhergehenden Ansprüche,
**dadurch gekennzeichnet,**
**dass** mindestens eine Regel die Anzahl der benachbarten Teilnehmer (I, B, D) angibt, an welche die Nachricht übermittelt werden soll.

16. Verfahren nach Anspruch 15,
**dadurch gekennzeichnet,**
**dass** die Anzahl der benachbarten Teilnehmer (I, E, D), die die Nachricht erhalten sollen, durch einen beim Teilnehmer (C) gespeicherten Parameter festgelegt wird.

17. Verfahren nach einem der vorhergehenden Ansprüche,
**dadurch gekennzeichnet,**
**dass** von einem Teilnehmer (C) eine Nachricht nur einmal an mindestens einen benachbarten Teilnehmer (I, B, D) übermittelt wird.

18. Verfahren nach einem der vorhergehenden Ansprüche,
**dadurch gekennzeichnet,**
**dass** der Erhalt der Nachricht vom benachbarten Teilnehmer (I, B, D) an den versendenden Teilnehmer (C) bestätigt wird.

19. Verfahren nach Anspruch 18,
**dadurch gekennzeichnet,**
**dass** einem benachbarten Teilnehmer (I, B, D), welcher den Erhalt der Nachricht nicht bestätigt hat, erst wieder die Nachricht übermittelt wird, wenn mindestens ein Übermittlungsversuch der Nachricht an mindestens einen weiteren benachbarten Teilnehmer (I, B, D) nicht oder nur teilweise erfolgreich war.

20. Verfahren nach den Ansprüchen 18 und 19,
**dadurch gekennzeichnet,**
**dass** nur beim ersten Übermittlungsversuch die benachbarten Teilnehmer (B) mit niedriger Kommunikationsebene gegenüber den Teilnehmern (I, D) mit höherer Kommunikationsebene bevorzugt werden.

21. Verfahren nach den Ansprüchen 18 bis 20,
**dadurch gekennzeichnet,**
**dass** beim zweiten Übermittlungsversuch die Nachricht an die benachbarten Teilnehmer (B, D, I) in Abhängigkeit ihrer Einschaltzeitpunkte übermittelt wird.

22. Verfahren nach den Ansprüchen 18 bis 21,
**dadurch gekennzeichnet,**
**dass** die Nachricht nur an die benachbarten Teilnehmer (B, I, D) übermittelt wird, die noch keine Bestätigung an den versendenden Teilnehmer (C) gesendet haben.

23. Verfahren nach den Ansprüchen 18 bis 22,
**dadurch gekennzeichnet,**
**dass** ein beim versendenden Teilnehmer (C) gespeicherter Parameter die Anzahl der durchzuführenden Übermittlungsversuche angibt.

24. Verfahren nach den Ansprüchen nach einem der vorangehenden Ansprüche,
**dadurch gekennzeichnet,**
**dass** eine von der Basiseinhsit (A) an mindestens einen Teilnehmer (B bis T) zu versendenden Nachricht an Teilnehmer (E, G, H, F, N, M) mit hoher Kommunikationsebene übermittelt wird.

25. Verfahren nach Anspruch 24, **dadurch gekennzeichnet, dass** die Reihenfolge der Übermittlung an die Teilnehmer (E, G, H, F, N, M) mit hoher Kommunikationsebene nach den Einschaltzeitpunkten der Teilnehmer (E, G, H, F, N, M) bestimmt wird.

26. System zur Übertragung einer Nachricht in einem funkbetriebenen Kommunikationsnetz mit einer Basiseinheit (A) und mehreren Teilnehmern (B bis T), wobei die Basiseinheit (B) und die Teilnehmer (B bis T) jeweils einen Sender und einen Empfänger aufweisen und wobei der Empfänger zu zyklischen Einschaltzeitpunkten für jeweils einen bestimmten Empfangszeitraum aktiviert wird,
- mit einem Teilnehmer (C) zum Übermitteln einer vom Teilnehmer (C) an die Basiseinheit (A) zu versendenden Nachricht an mindestens einen benachbarten Teilnehmer (I, B, D) in Abhängigkeit mindestens einer Regel,
- mit dem mindestens einen benachbarten Teilnehmer (I, B, D) zum Übermitteln der Nachricht in Richtung der Basiseinheit (A) gemäss der mindestens einen Regel an mindestens einen seiner benachbarten Teilnehmer (T, B, K, J, D),
- mit dem mindestens einen die Nachricht empfangenden benachbarten Teilnehmer (T, B, K, J, D) zum Übermitteln der Nachricht gemäss der mindestens einen Regel in Richtung der Basiseinheit (A) an mindestens einen seiner benachbarten Teilnehmer (T, B, K, J, D), wobei dieser Vorgang entsprechend wiederholt wird, sodass der jeweilige die Nachricht empfangende Teilnehmer (T, B, K, J, D) gemäss der zumindest einen Regel die Nachricht wiederum an mindestens einen seiner Teilnehmer (T, B, K, J, D) übermittelt, wobei von jedem Teilnehmer (B bis T) mindestens eine Information betreffend den Einschaltzeitpunkt des Teilnehmers (B bis T) an seine benachbarten Teilnehmer (B bis T) gesendet wird, wobei zum Übermitteln der Nachricht die Einschaltzeit der benachbarten Teilnehmer (B bis T) als mindestens eine Regel verwendet wird, und wobei vom Teilnehmer (B bis T) demjenigen seiner benachbarten Teilnehmer (B bis T) die Nachricht übermittelt wird, der den frühest möglichen Einschaltzeitpunkt aufweist, und
- mit dem mindestens einen Teilnehmer (B, T, J), der direkt mit der Basiseinheit (A) benachbart ist, zur Übermittlung der Nachricht zumindest an die Basiseinheit (A).

## Claims

1. Method for transmitting a message in a radio-operated communication network comprising a base unit (A) and a plurality of nodes (B to T), wherein the base unit (A) and the nodes (B to T) in each case have a transmitter and a receiver and wherein the receiver is activated at cyclical switch-on times for a specific receiving time period in each case, wherein a message that is to be sent by a node (C) to the base unit (A) is transmitted by the node (C) to at least one adjacent node (D, B, I) as a function of at least one rule, wherein in accordance with the at least one rule the message is transmitted by the at least one adjacent node (D, B, I) in the direction of the base unit (A) to at least one of its adjacent nodes (T, B, K, J, D),
wherein in accordance with the at least one rule the message is transmitted in each case by the at least one adjacent node (T, B, K, J, D) receiving the message in the direction of the base unit (A) to at least one of its adjacent nodes (T, B, K, J, D),
wherein this operation is repeated accordingly such that the respective node (T, B, K, J, D) receiving the message transmits the message in accordance with the at least one rule in turn to at least one of its nodes (T, B, K, J, D), wherein the message is at least transmitted to the base unit (A), wherein at least one item of information relating to the switch-on time of the node (B to T) is sent by each node (B to T) to its adjacent nodes (B to T),
wherein, in order to transmit the message, the switch-on time of the adjacent node (B to T) is used as at least one rule, and
wherein the message is transmitted by the node (B to T) to that of its adjacent nodes (B to T) that has the earliest possible switch-on time.

2. Method according to claim 1,
**characterised in that**
the communication level of a node (B to T) is used as a further rule.

3. Method according to claim 2,
**characterised in that**
the shortest distance from a node (B to T) to the base unit (A) is determined in order to identify the communication level of the nodes (B to T).

4. Method according to claim 3,
**characterised in that**
in order to determine the shortest transmission path a signalling message containing at least one parameter is sent by the base unit (A) to the adjacent nodes (J, B, D, T, S, P), **in that** a communication level is stored as a function of the parameter by the nodes (J, B, D, T, S, P) receiving the signalling message,
**in that** a further signalling message containing a further parameter is sent by said nodes (J, B, D, T, S, P) to their adjacent nodes (R, Q, 0, L, K, I, C, E, G),
and
**in that** a further communication level is stored as a function of the further parameter by the nodes (R, Q, 0, L, K, I, C, E, G) receiving the further signalling message, and
**in that** the method is continued until all the nodes (B to T) have been assigned a communication level corresponding to the shortest transmission path between the node (B to T) and the base unit (A).

5. Method according to claims 3 and 4,
**characterised in that**
the parameter in the signalling message specifies the number of nodes (B to T) between the node (B to T) and the base unit (A).

6. Method according to claims 3 to 5,
**characterised in that**
the node (B to T) receiving a signalling message containing a parameter compares the parameter in the signalling message with an already received parameter.

7. Method according to claim 8,
**characterised in that**
the signalling message containing the parameter is discarded if the value of the parameter is greater than the already received parameter.

8. Method according to one of the preceding claims,
**characterised in that**
the message is forwarded in accordance with a rule by the at least one node (R, Q, 0, L, K, I, C, E, G) sending the message to at least one node (J, B, D, T, S, P) having a lower communication level.

9. Method according to claim 8,
**characterised in that**
the at least one adjacent node (J, B, D, T, S, P) having a lower communication level is identified by the sending node (R, Q, 0, L, K, I, C, E, G) by making a comparison with its own communication level.

10. Method according to one of the preceding claims,
**characterised in that**
either a hazard warning control centre and/or a hazard warning unit is used as the base unit (A).

11. Method according to one of the preceding claims,
**characterised in that**
a hazard warning unit is used as the node (B to T).

12. Method according to claim 10,
**characterised in that**
a fire alarm control centre, an intruder alarm control centre and/or a gas alarm control centre are/is used as the hazard warning control centre.

13. Method according to claims 10 and 11,
**characterised in that**
a fire alarm, an intruder alarm, a gas leak detector, an acoustic alarm unit, an optical alarm unit, a surveillance camera and/or an optoacoustic alarm unit are/is used as a hazard warning unit.

14. Method according to one of the preceding claims,
**characterised in that**
the message represents an alarm message, a signalling message and/or a message relating to the exchange of payload data.

15. Method according to one of the preceding claims,
**characterised in that**
at least one rule specifies the number of adjacent nodes (I, B, D) to which the message is to be transmitted.

16. Method according to claim 15,
**characterised in that**
the number of adjacent nodes (I, B, D) that are to receive the message is specified by means of a parameter stored at the node (C).

17. Method according to one of the preceding claims,
**characterised in that**
a message is transmitted only once by one node (C) to at least one adjacent node (I, B, D).

18. Method according to one of the preceding claims,
**characterised in that**
the receipt of the message by the adjacent node (I, B, D) is confirmed to the sending node (C).

19. Method according to claim 18,
**characterised in that**
the message is not retransmitted to an adjacent node (I, B, D) that has not confirmed the receipt of the message until at least one attempt to transmit the message to at least one other adjacent node (I, B, D) was unsuccessful or only partially successful.

20. Method according to claims 18 and 19,
**characterised in that**
the adjacent nodes (B) having a lower communication level are given precedence over the nodes (I, D) having a higher communication level only during the first transmission attempt.

21. Method according to claims 18 to 20,
**characterised in that**
during the second transmission attempt the message is transmitted to the adjacent nodes (B, D, I) as a function of their switch-on times.

22. Method according to claims 18 to 21,
**characterised in that**
the message is transmitted only to those adjacent nodes (B, I, D) that have not yet sent a confirmation to the sending node (C).

23. Method according to claims 18 to 22,
**characterised in that**
a parameter stored at the sending node (C) specifies the number of transmission attempts that are to be made.

24. Method according to one of the preceding claims,
**characterised in that**
a message that is to be sent by the base unit (A) to at least one node (B to T) is transmitted to nodes (E, G, H, F, N, M) having a high communication level.

25. Method according to claim 24, **characterised in that** the order of the transmission to the nodes (E, G, H, F, N, M) having a high communication level is determined according to the switch-on times of the nodes (E, G, H, F, N, M).

26. System for transmitting a message in a radio-operated communication network comprising a base unit (A) and a plurality of nodes (B to T), wherein the base unit (B) and the nodes (B to T) in each case have a transmitter and a receiver and wherein the receiver is activated at cyclical switch-on times for a specific receiving time period in each case,
- comprising a node (C) for transmitting a message that is to be sent by the node (C) to the base unit (A) to at least one adjacent node (I, B, D) as a function of at least one rule,
- comprising the at least one adjacent node (I, B, D) for transmitting the message in the direction of the base unit (A) in accordance with the at least one rule to at least one of its adjacent nodes (T, B, K, J, D),
- comprising the at least one adjacent node (T, B, K, J, D) receiving the message for transmitting the message in accordance with the at least one rule in the direction of the base unit (A) to at least one of its adjacent nodes (T, B, K, J, D), wherein this operation is repeated accordingly such that the respective node (T, B, K, J, D) receiving the message transmits the message in accordance with the at least one rule in turn to at least one of its nodes (T, B, K, J, D), wherein at least one item of information relating to the switch-on time of the node (B to T) is sent by each node (B to T) to its adjacent nodes (B to T), wherein, in order to transmit the message, the switch-on time of the adjacent node (B to T) is used as at least one rule, and wherein the message is transmitted by the node (B to T) to that of its adjacent nodes (B to T) that has the earliest possible switch-on time, and
- comprising the at least one node (B, T, J) that is directly adjacent to the base unit (A), in order to transmit the message at least to the base unit (A).

## Revendications

1. Procédé de transmission d'un message dans un réseau de communication radio comportant une unité de base (A) et plusieurs usagers (B à T}, l'unité de base (A) et les usagers (B à T) comportant respectivement un émetteur et un récepteur et le récepteur étant activé, à des instants de mise en marche cycliques, respectivement pour une période de réception déterminée, un message à envoyer par un usager (C} à l'unité de base (A) étant transmis par l'usager (C) à un moins un usager voisin (D, B, I) en fonction d'au moins une règle, le message étant transmis en direction de l'unité de base (A) par l'au moins un usager voisin (D, B, I), conformément à l'au moins une règle, à au moins l'un de ses usagers voisins (T, B, K, J, D), cette opération étant répétée par analogie, de sorte que l'usager respectif (T, B, K, J, D} recevant le message transmet à son tour le message conformément à l'au moins une règle à au moins un de ses usagers (T, B, K, J, D), le message étant transmis au moins à l'unité de base (A), chaque usager (B à T) transmettant au moins une information concernant l'instant de mise en marche de l'usager (B à T) à ses usagers voisins (B à T), le temps de mise en marche des usagers voisins (B à T) étant utilisé comme au moins une règle pour transmettre le message et l'usager (B à T) transmettant le message à celui de ses usagers voisins (B à T) qui présente l'instant de mise en marche le plus tôt possible.

2. Procédé selon la revendication 1, **caractérisé en ce qu'**est utilisé, en tant qu'autre règle, le niveau de communication d'un usager (B à T).

3. Procédé selon la revendication 2, **caractérisé en ce que** la distance la plus courte entre un usager (B à T) et l'unité de base (A) est déterminée pour définir le niveau de communication des usagers (B à T).

4. Procédé selon la revendication 3, **caractérisé en ce que** :
l'unité de base (A) envoie un message de signalisation avec au moins un paramètre aux usagers voisins (J, B, D, T, S, P) pour déterminer le chemin de transmission le plus court ;
les usagers (J, B, D, T, S, P) recevant le message de signalisation sauvegardent un niveau de communication en fonction du paramètre ;
ces usagers (J, B, D, T, S, P) envoient un autre message de signalisation avec un autre paramètre à leurs usagers voisins (R, Q, 0, L, K, I, C, E, G) et
les usagers (R, Q, 0, L, K, I, C, E, G) recevant l'autre message de signalisation sauvegardent un autre niveau de communication en fonction de l'autre paramètre et
le procédé se poursuit jusqu'à ce qu'un niveau de communication soit associé à tous les usagers (B à T) en fonction du chemin de transmission le plus court entre les usagers (B à T) et l'unité de base (A).

5. Procédé selon les revendications 3 et 4, **caractérisé en ce que** le paramètre indique, dans le message de signalisation, le nombre d'usagers (B à T) entre l'usager (B à T) et l'unité de base (A).

6. Procédé selon les revendications 3 à 5,
**caractérisé en ce que** l'usager (B à T) recevant un message de signalisation avec un paramètre compare le paramètre contenu dans le message de signalisation avec un paramètre déjà reçu.

7. Procédé selon la revendication 6, **caractérisé en ce que** le message de signalisation contenant le paramètre est rejeté si la valeur du paramètre est supérieure au paramètre déjà reçu.

8. Procédé selon l'une des revendications précédentes, **caractérisé en ce que**, conformément à une règle, l'au moins un usager (R, Q, 0, L, K, I, C, E, G) émettant le message retransmet le message à au moins un usager (J, B, D, T, S, P) avec un niveau de communication inférieur.

9. Procédé selon la revendication 8, **caractérisé en ce que** l'au moins un usager voisin (J, B, D, T, S, P} avec un niveau de communication inférieur est défini par l'usager émetteur (R, Q, 0, L, K, I, C, E, G) par comparaison avec son propre niveau de communication.

10. Procédé selon l'une des revendications précédentes, **caractérisé en ce que** sont utilisées, en tant qu'unité de base (A), une centrale de signalisation de danger et/ou une unité de danger.

11. Procédé selon l'une des revendications précédentes, **caractérisé en ce qu'**une unité de danger est utilisée en tant qu'usager (B à T).

12. Procédé selon la revendication 10, **caractérisé en ce que** sont utilisées, en tant que centrale de signalisation de danger, une centrale de signalisation d'incendie, une centrale de signalisation d'effraction et/ou une centrale de signalisation de gaz.

13. Procédé selon les revendications 10 et 11, **caractérisé en ce que** sont utilisés, en tant qu'unité de danger, un détecteur d'incendie, un détecteur d'effraction, un détecteur de gaz, une unité de détection acoustique, une unité de détection optique, une caméra de surveillance et/ou une unité de détection opto-acoustique.

14. Procédé selon l'une des revendications précédentes, **caractérisé en ce que** le message représente un message d'alarme, un message de signalisation et/ou un message concernant les échanges de données utiles.

15. Procédé selon l'une des revendications précédentes, **caractérisé en ce qu'**au moins une règle indique le nombre d'usagers voisins (I, B, D) auxquels le message doit être transmis.

16. Procédé selon la revendication 15, **caractérisé en ce que** le nombre d'usagers voisins (I, B, D) devant recevoir le message est déterminé par un paramètre sauvegardé auprès de l'usager (C).

17. Procédé selon l'une des revendications précédentes, **caractérisé en ce qu'**un message n'est transmis qu'une fois par un usager (C) à au moins un usager voisin (I, B, D).

18. Procédé selon l'une des revendications précédentes, **caractérisé en ce que** la réception du message est confirmée par l'usager voisin (I, B, D) à l'usager émetteur (C).

19. Procédé selon la revendication 18, **caractérisé en ce que** le message n'est de nouveau transmis à un usager voisin (I, B, D) qui n'a pas confirmé la réception du message que si au moins une tentative de transmission du message à au moins un autre usager voisin (I, B, D) n'a pas réussi ou n'a réussi que partiellement.

20. Procédé selon les revendications 18 et 19, **caractérisé en ce que** les usagers voisins (B) avec un niveau de communication inférieur ne sont utilisés préférentiellement par rapport aux usagers (I, D) avec un niveau de communication supérieur que lors de la première tentative de transmission.

21. Procédé selon les revendications 18 à 20, **caractérisé en ce que**, à la deuxième tentative de transmission, le message est transmis aux usagers voisins (B, D, I) en fonction de leurs instants de mise en marche.

22. Procédé selon les revendications 18 à 21, **caractérisé en ce que** le message n'est transmis qu'aux usagers voisins (B, I, D} qui n'ont pas encore envoyé de confirmation à l'usager émetteur (C).

23. Procédé selon les revendications 18 à 22, **caractérisé en ce qu'**un paramètre sauvegardé auprès de l'usager émetteur (C) indique le nombre de tentatives de transmission à effectuer.

24. Procédé selon l'une des revendications précédentes, **caractérisé en ce qu'**un message que l'unité de base (A) doit envoyer à au moins un usager (B à T) est transmis à des usagers (E, G, H, F, N, M) avec un niveau de communication élevé.

25. Procédé selon la revendication 24, **caractérisé en ce que** l'ordre de transmission aux usagers (E, G, H, F, N, M) avec un niveau de communication élevé est déterminé d'après les instants de mise en marche des usagers (E, G, H, F, N, M).

26. Système de transmission d'un message dans un réseau de communication radio comportant une unité de base (A) et plusieurs usagers (B à T), l'unité de base (A) et les usagers (B à T) comportant respectivement un émetteur et un récepteur et le récepteur étant activé, à des instants de mise en marche cycliques, respectivement pour une période de réception déterminée, comportant :
- un usager (C) pour la transmission d'un message à envoyer par l'usager (C) à l'unité de base (A) à un moins un usager voisin (I, B, D) en fonction d'au moins une règle ;
- l'au moins un usager voisin (I, B, D) pour la transmission du message en direction de l'unité de base (A) selon l'au moins une règle à au moins un de ses usagers voisins (T, B, K, J, D) ;
- l'au moins un usager voisin (T, B, K, J, D) recevant le message pour la transmission du message selon l'au moins une règle en direction de l'unité de base (A) à au moins un de ses usagers voisins (T, B, K, J, D), cette opération étant répétée par analogie, de sorte que l'usager respectif (T, B, K, J, D) recevant le message transmet à son tour le message conformément à l'au moins une règle à au moins un de ses usagers (T, B, K, J, D), chaque usager (B à T) transmettant au moins une information concernant l'instant de mise en marche de l'usager (B à T) à ses usagers voisins (B à T), le temps de mise en marche des usagers voisins (B à T) étant utilisé comme au moins une règle pour transmettre le message et l'usager (B à T) transmettant le message à celui de ses usagers voisins (B à T) qui présente l'instant de mise en marche le plus tôt possible et
- l'au moins un usager (B, T, J) qui est directement voisin de l'unité de base (A) pour la transmission du message au moins à l'unité de base (A).
